# EUROPEAN PATENT SPECIFICATION

(11) **EP 3 296 631 B1**
(45) Date of publication and mention of the grant of the patent: **30.01.2019**
(21) Application number: 16189025.6
(22) Date of filing: 15.09.2016
(51) Int. Cl.: F23D 14/58, F23D 14/56, C03B 5/235, C03B 19/14, C03B 23/00, C03B 23/207, F23D 14/02, F23D 99/00

(54) **BURNER FOR GENERATION OF AN ELONGATED FLAME**
BRENNER ZUR ERZEUGUNG EINER LÄNGLICHEN FLAMME
BRÛLEUR POUR LA PRODUCTION D'UNE FLAMME ALLONGÉE

(43) Date of publication of application: 21.03.2018
(73) Proprietor: Hilgenberg, Ingo, 34323 Malsfeld (DE)
(72) Inventor: Hilgenberg, Ingo, 34323 Malsfeld (DE)
(74) Representative: Prüfer & Partner mbB Patentanwälte · Rechtsanwälte

(56) References cited:
- WO-A1-2011/151735
- US-A- 5 611 682
- US-A- 6 074 197
- US-A1- 2002 132 205
- US-A1- 2011 297 762
- US-A1- 2013 323 463
- US-B1- 6 793 160

## Description

The present application relates to burners for the generation of flames.

Burners in general are used for the generation of flames. Combustible gases or hydrogen gas are/is mixed with oxidants, (e.g. air, oxygen), thereby capable of generating a flame. The generated flames can be particularly used for the heat-treatment of various material, e.g. heat treatment of metal, metal alloys, polymers, glass and other materials. When applied to glass, the heat input of the flame makes glass soft, flexible, bendable and generally workable. Therefore, different types of burners are used, for instance in glass blowers' workshops.

In order to process and shape glass, glass has to be viscous, i.e. has to be heated up to a temperature of approximately 900°C to 2.000°C (the upper limit for glass with a high melting temperature, e.g. quartz glass).

JP 2003 246627 A discloses a quartz burner having a diameter expanded bulge portion provided at base end portions, where outer and inner quartz tubes are welded. Said burner is composed of a concentric multitubular structure by concentrically arranged quartz tubes, each having a different diameter to fit to each other, wherein the base end part of an outside quartz tube to the outer circumference of the inside quartz tubes. In such a structure, combustible gas, or even a gas mixture of combustible gas and oxidant is led out of multiple glass tubes in order to produce a circular, focused flame.

WO 2011/151735 discloses a burner and a kiln comprising a burner, wherein the burner nozzle is made of steel, preferably AISI 310.

US 2011/0297762 A1 comprises a burner nozzle with a rectangular box-like ceramic tip and stainless steel frame or jacket.

US 6,793,160 B1 discloses a burner nozzle made of ceramic or brick, comprising a plurality of tubes extending therethrough.

US 6,074,197 discloses an apparatus for a combustion process, including a metallic burner assembly with a refractory block.

US 2002/0132205 A1 discloses a gas burner with burner ports extending through a refractory material.

Further burners suitable for the processing of glass known in the state of the art are burners with a metal body, which contain multiple very small gas outlets. Those burners firstly cannot produce pure, metal-free flames, and secondly, a complex cooling system is necessary, as the comparatively hot flame for the processing of glass is generated directly out of a metal body.

During processing of glass, multiple burners or burner stations are often arranged in a sequence, wherein a single processing step is performed in each flame generated by each burner, and the glass part to be processed has to be transported between the single stations, i.e. has to be lifted and carried into different flames of different stations.

It is therefore an objective technical problem of the present invention to improve glass processing and to avoid the above mentioned problems.

The object is solved by a burner according to claim 1 and a process for the production of such a burner according to claim 15. Further advancements and preferred embodiments are defined in the dependent claims.

The present invention provides at least one burner body made of quartz or borosilicate glass, wherein the burner is adapted to eject an elongated, band-shaped flame. Such a flame can be generated by burning a mixture of combustible gas and oxidant, i.e. a mixture of natural gas or hydrogen with air or oxygen.

An elongated flame, i.e. band-shaped flame, enables that a glass part to be processed can be transported continuously within a flame for different working steps, and the glass does not have to be transported between different flames, so that no temperature decrease will be induced and no loss of time will occur.

A provision of bodies made of quartz or borosilicate glass ensures that flames with extraordinary high temperatures can be generated, without deforming or degenerating the body. Compared to burners made of metal or metal alloys, no oxidation particles, which can originate from the oxidation of metals at high temperatures, are contained in the flame. As glass is a very good insulating material, no cooling is necessary despite very high flame temperatures that can be obtained. A burner body made of quartz or borosilicate glass thus has a very long lifetime, and can further be fabricated with very small dimensions.

In particular quartz or borosilicate glass is a suitable material for burner capable of generating an elongated flame with a temperature suitable for processing glass, as besides the high temperature resistance, a burner made of those materials can be precisely formed or processed. Therefore, a burner with precise dimensions can easily be produced, allowing a high burner performance over the whole length of the elongated line. In a first aspect of the present invention, the elongated flame is generated by a body made of quartz or borosilicate glass having a slit as gas outlet on the upper side of the body made of quartz or borosilicate glass. Then, the shape of the flame corresponds to the elongated shape of the slit as it exits the slit. Furthermore, no flame-focusing device or member is needed around the body made of quartz or borosilicate glass.

The slit has preferably a length of 5 to 500 mm, further preferably from 10 to 250 mm. The slit further has a width between preferably 0.01 to 2 mm, more preferably between 0.2 to 1.5 mm. The width of the slit in general depends on the flame to be generated.

Furthermore, the burner preferably comprises a base frame supporting or at least partially encasing the body made of quartz or borosilicate glass. The base frame is preferably made of an iron-containing alloy, more preferably steel, optionally ceramics, brass or glass, or even a combination thereof. Other materials, which are not easy to oxidize are also suitable, e.g. boron nitride or other nitrides or oxides.

In a second aspect of the present invention, the elongated flame is generated by a multiplicity of nozzles made of quartz or borosilicate glass, which are aligned in a line-shape. The nozzle bodies are made of quartz or borosilicate glass with a diameter of preferably 2 to 10 mm, wherein small holes are provided, extending through the nozzles. The nozzle holes preferably have a diameter of 1 to 4 mm, more preferably 1.5 to 3 mm.

Furthermore, the nozzles can comprise one or more capillaries made of quartz or borosilicate glass. Those capillaries have a preferable diameter of 0.1 to 2 mm, more preferable 0.5 to 1.5 mm.

The nozzle bodies are supported by nozzle supports, provided with seals, e.g. O-rings. The nozzle supports are aligned on a base frame. Due to the easy design, nozzle bodies can easily and conveniently be exchanged, without removing the burner from the machine, and even without demounting the nozzle supports from the base frame. Furthermore, single nozzle bodies can be exchanged if one of them has a defect, avoiding a complete dismantling of the burner. This can lead to reduced maintenance efforts. Nozzle bodies and capillaries can easily be formed by extrusion of quartz or borosilicate glass. Compared to conventionally used capillaries made of ruby, which have to be processed by honing and lapping, the second aspect of the present invention offers an increased profitability. This aspect has the further advantage that the length of the flame could be variable by the possibility to supply only certain nozzle bodies with gas.

Such burner can for example be used for heating glass products, in particular quartz or borosilicate glass products.

The disclosure of the following preferred, but non-limiting embodiments of the invention are described in detail by reference to the enclosed drawings.
- Fig. 1: is an isometric view of a burner according to the first embodiment of the present invention relating to the first aspect.
- Fig. 2: is an isometric view of a burner according to the second embodiment of the present invention relating to the first aspect.
- Fig. 3a: is a front view of a burner of the third embodiment of the present invention relating to the first aspect.
- Fig. 3b: is a top view of a burner according to the third embodiment of the present invention relating to the first aspect.
- Fig. 4a: is an isometric view of a burner according to the fourth embodiment of the present invention relating to the first aspect.
- Fig. 4b: is a front view of a burner according to the fourth embodiment of the present invention relating to the first aspect.
- Fig. 5: shows the interior of a burner according to the first embodiment of the present invention relating to the first aspect.
- Fig. 6: shows a burner according to the fifth embodiment of the invention relating to the second aspect.
- Fig. 7: shows a single nozzle used in a burner according to the fifth embodiment of the invention relating to the second aspect, wherein a multitude of such single nozzles are combined.
- Fig. 8: shows the sixth embodiment of the invention relating to the second aspect, wherein a nozzle comprises a multitude of capillaries.
- Fig. 9: shows a cross-sectional view of a nozzle with a multitude of capillaries according to the sixth embodiment of the present invention relating to the second aspect.
- Fig. 10: shows a nozzle according to the seventh embodiment of the present invention relating to the second aspect.

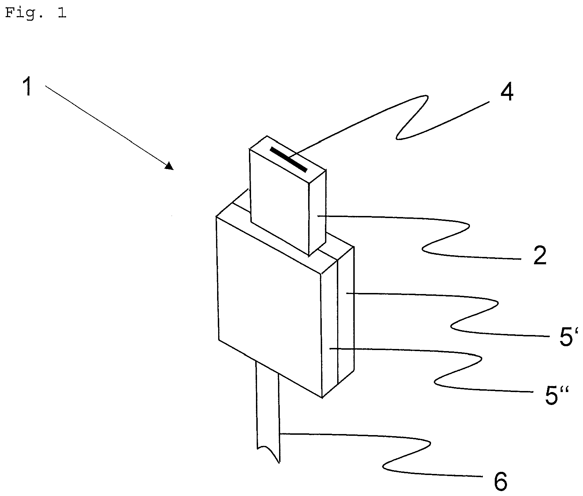

Figs. 1 to 5 embody the first aspect of the present invention.

Fig. 1 shows a first embodiment of a burner 1 comprising a body 2 made of glass or borosilicate glass. The body 2 comprises a slit 4 in the top section of the body 2. The body 2 protrudes from a base frame 5, which comprises two parts in the present embodiments, parts 5' and 5". A gas supply line 6 is connected to the base frame 5. The base frame 5, in the present embodiment, comprising parts 5' and 5", forms a slot 7 (not shown in Fig. 1).

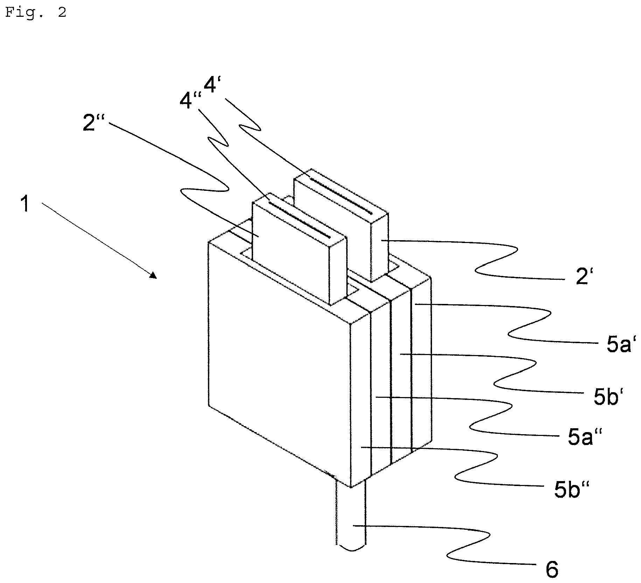

Fig. 2 shows a second embodiment of the present invention. In the second embodiment, two bodies 2', 2" are provided, both bodies comprising a slit 4, 4" in the top section of the bodies 2', 2". The base frame 5 in the second embodiment is composed of four parts 5a', 5b', 5a" and 5b". Connected to the base frame is a gas supply line 6. Similarly to the first embodiment, the bodies 2', 2" made of quartz or borosilicate glass protrude from the base frame 5.

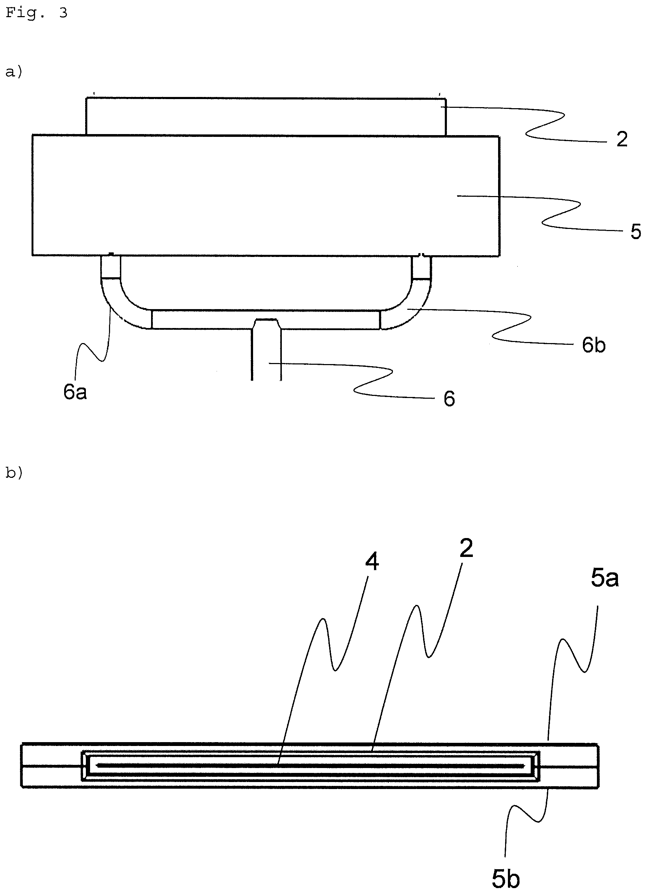

Fig. 3 discloses a third embodiment of the present invention, wherein Fig. 3a presents a front view and Fig. 3b presents a top view. In Fig. 3a, it can be seen that the burner 1 has an elongated shape. Again, the body 2 protrudes from the base frame 5. However, the gas supply line is branched into two parts 6a, 6b in order to homogenously supply gas to the burner 1. The top view in Fig. 3b shows that also in this embodiment, the base frame 5 is composed of two parts 5a and 5b, and that an elongated slit 4 is present in the body 2 made of quartz and borosilicate glass.

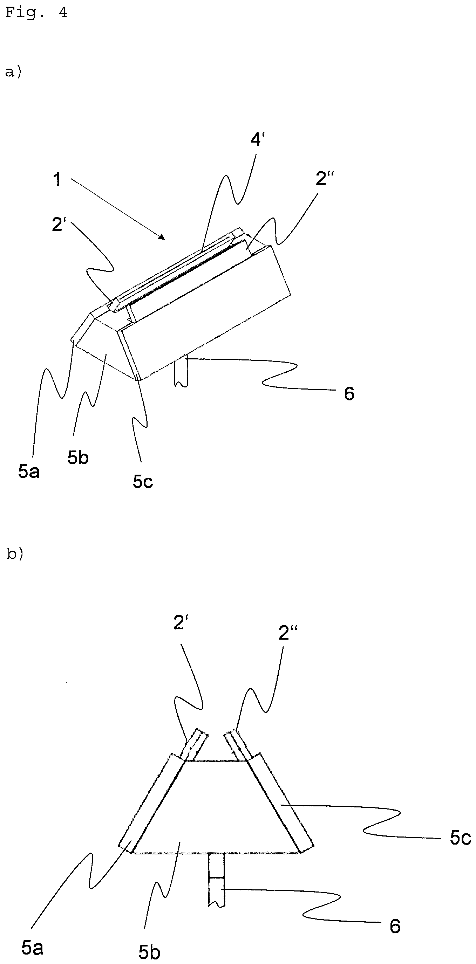

Fig. 4 discloses a fourth embodiment of the present invention. Similarly to the second embodiment, this embodiment of the burner 1 comprises two bodies 2', 2" made of quartz or borosilicate glass, respectively comprising one slit 4' (and 4", however not visible in Fig. 4a). In this embodiment, the base frame is composed of three parts 5a, 5b and 5c, and the base frame is connected to a gas supply line 6.

Fig. 4b discloses a front view, showing the angle in which the bodies 2', 2" are arranged.

This angle is preferably 10° to 90°, more preferably 45° to 70°, even more preferably 55° to 65°.

This embodiment allows a higher energy input into one line.

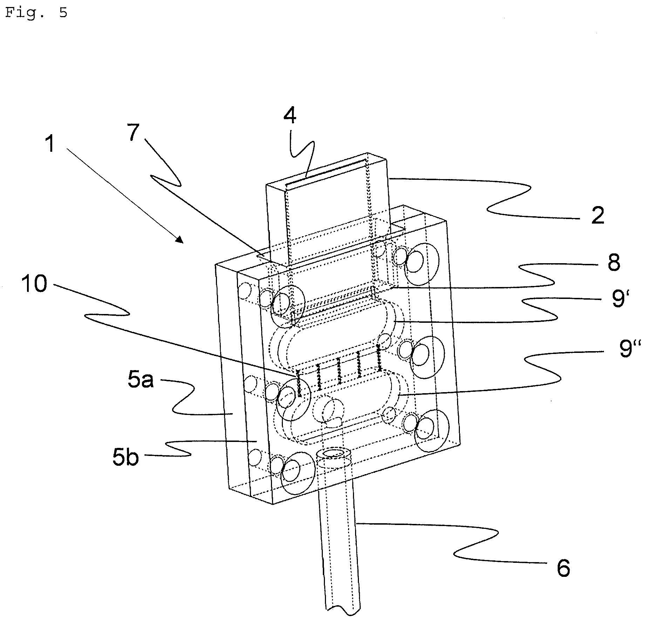

Fig. 5 shows an isometric view of a burner 1 according to first embodiment of the present invention, in particular the burner 1 according to Fig. 1. However, also the interior of the burner 1 is presented. Fig. 5 in particular shows a chamber (comprising two different parts 9' and 9"), wherein baffles 10 are arranged in between the two parts of the chamber 9', 9". In the present embodiment, the baffles 10 are formed as small tubes/capillaries and connect the two parts of the chamber 9' and 9". The baffles 10 ensure a turbulent flow and therefore a homogeneous distribution of the gas within the chamber to be ejected through the slit 4 of the body 2.
Furthermore, it can clearly be seen that the gas supply line 6 leads into the second part of the chamber 9". Above the first part of the chamber 9', a projection 8 is formed, on which the body 2 sits. Above the projection 8, the slot 7 is provided.

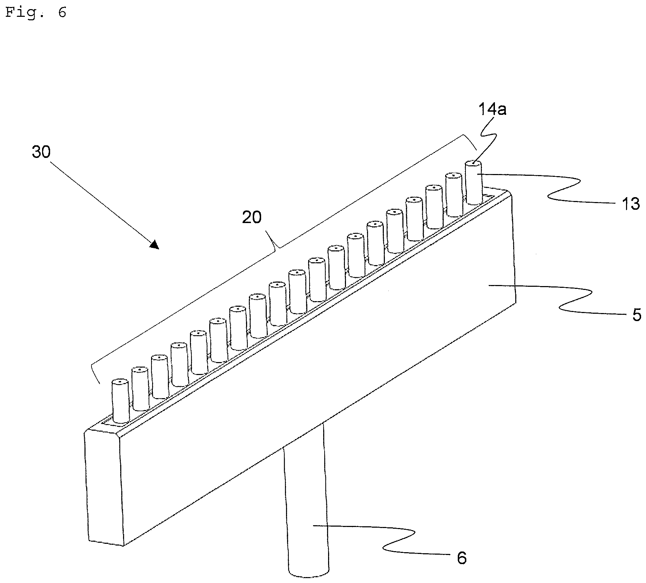

Figs. 6 to 10 embody a second aspect of the present invention. In the embodiments of the second aspect, same or corresponding elements or means are denoted by same/corresponding reference signs.

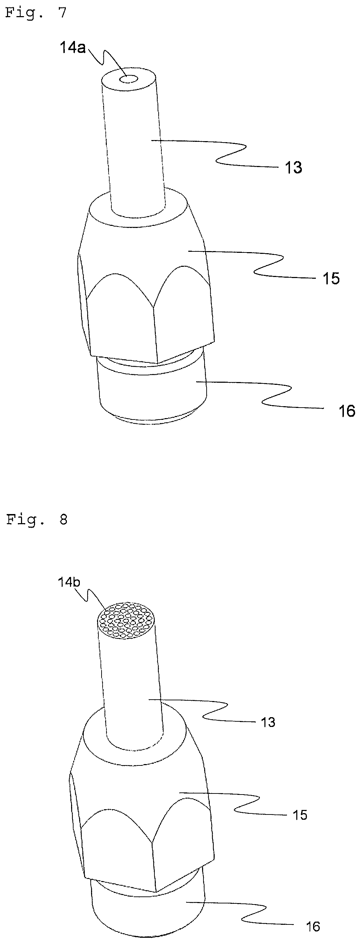

Figs. 6 and 7 show a burner 30 according to the fifth embodiment of the invention, inter alia comprising a multitude 20 of quartz or borosilicate nozzle bodies 13 supported and arranged in a line on a base frame 5. Again, a base body 5 is provided with a gas supply line 6. In the base body 5, there are several holes 17 (not shown in Figs. 6 and 7) provided with threads 18 (not shown in Figs. 6 and 7). Nozzle supports 15 are inserted into the holes 15, wherein the nozzle supports 15 support nozzle bodies 13 made of quartz or borosilicate glass. On the top of the nozzle bodies 13, nozzle holes 14a are provided which are in communication with a chamber 9 and with the gas supply line 6 when mounted on the base body 5.

Such an arrangement is also capable of producing an elongated flame with all the advantages as presented above for the first aspect.

Fig. 7 further shows details of a complete single nozzle as used in the fifth embodiment. Herein a nozzle body 15 is provided, into which a nozzle body 13, made quartz or borosilicate glass or ceramic, with the nozzle hole 14a is inserted. The nozzle support 15 is provided with a thread 16, being able to be fixedly inserted into a hole 17 of the base body 5, wherein the hole 17 is provided with a counter-thread 18.

Fig. 8 shows a nozzle according to a sixth embodiment of the invention, being similar to the fifth embodiment of the invention. The concept of a series of nozzles arranged in a line is also used in this embodiment, the nozzles inter alia comprising a nozzle support 15 provided with a thread 16. Again, a nozzle body 13 made of quartz or borosilicate glassis inserted into the nozzle support 15. The difference to the fifth embodiment is, however, that multiple capillaries 14b are arranged inside said nozzle body 13, the capillaries 14b also being made of quartz or borosilicate glass. Therefore, a multitude of channels for gas is provided into the nozzle body 13.

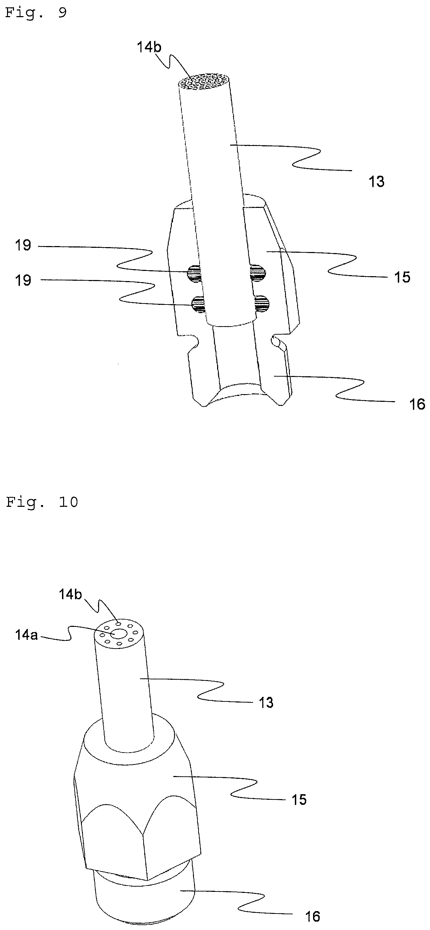

Fig. 9 presents a cross-sectional view of a nozzle, exemplarily of the sixth embodiment of the invention. In particular, the cross-section of the nozzle support 15 including the thread 16 is shown. Two seals 19, in the present embodiment O-rings, are inserted into the nozzle support 15, in order to tightly seal the nozzle support 15 at the nozzle body 13. Inside the nozzle body 13, a multitude of capillaries 14b is provided.

Fig. 10 presents a seventh embodiment of the present invention, being a hybrid of the fifth and the sixth embodiment. The seventh embodiment of the present invention also is based on a series of nozzle arranged in a line, comprising a nozzle support 15 with a thread 16 and a nozzle body 13. In the seventh embodiment, the nozzle body 13 both comprises a nozzle hole 14a and a multitude of capillaries 14b. The nozzle body 13 and the capillaries 14b are also made of quartz or borosilicate glass.

In the following, the production and the assembly of a burner 1 according to a first aspect of the invention is described.

Firstly, quartz or borosilicate glass plates of a specific thickness, preferably four ones, are joined, preferably by welding or anodic bonding, so that the glass plates encompass a slit. The joined glass plates form a body 2.
The body 2 can alternatively be formed by a sol-gel-process, comprising cold casting and sintering.
Subsequently, a base frame 5 is provided, wherein said base frame 5 comprises two parts 5', 5". The base frame 5 preferably also comprises a gas inlet line 6 and is made of an iron-containing alloy, preferably steel, ceramics, brass or glass, or a combination thereof. Other materials not easy to oxidize are also possible, e.g. boron nitride or other nitrides or oxides. When both parts of the base frame 5', 5" are connected, a slot 7 is formed, which is adapted to receive the quartz or borosilicate glass or ceramic body 2. An adhesion layer 11 is applied between the quartz or borosilicate glass body 2 and the base frame 5 before placing the quartz or borosilicate glass body 2 into the slot 7 of the base frame 5, the adhesion layer 11 preferably comprising epoxy resin, acrylate ceramics and/or other high-temperature resistant materials. Subsequently, the quartz or borosilicate glass body 2 is positioned in the slot 7 of the base frame 5. Finally, the gap between the body 2 and the slot 7 of the base frame 5 is sealed, preferably by a rubber seal 12, the rubber seal 12 preferably comprising PTFE, silicones and/or polyimide or other high-temperature resistant polymers or ceramic based glues.

In the following, the production and the assembly of a burner 30 according to a second aspect of the invention is described. Firstly, a nozzle support 15 with a thread 17 is provided. At least one suitable seal 19 is provided within the nozzle support 13, e.g. in the form of an O-ring. Subsequently, the nozzle body 13 made of quartz or borosilicate glass is pushed into the nozzle support 15. Finally, the nozzle support 15 equipped with the nozzle body 13 is screwed into a respective hole 17 in the base frame 5, the holes 17 provided with respective threads. Optionally, the nozzle support 15 can be mounted in the base frame 5 before equipping the nozzle support 15 with the nozzle body 13, as described above.

The present invention is not limited to the above mentioned embodiments.

The slot 7 can for example have tapered edges on the upper surface of the base frame 5.

Further, the burner 1 can be adapted to mix the fuel gas mixture before it leaves the slit 4, preferably is adapted to receive the mixed gas before being supplied to the burner 1 via the gas supply line 6.

A burner according to the first aspect of the present invention could for example comprise three or more bodies 2 made of quartz or borosilicate glass or ceramic, the base frame 5 would then have to be equipped with three or more slots 7. Furthermore, the base frame could comprise two or more chambers 9.

With regard to the second aspect, multiple rows of nozzles could be provided, optionally arranged such that the central axes of the nozzle bodies 13 of the two different rows include an angle, e.g. 10° to 90°, more preferably 45° to 70°, even more preferably 55° to 65°.

For both aspects, the design of the baffles 10 within the chamber 9 of the base frame 5 can vary and is not limited to a capillary-shape. For example, perforated plates, coils or other protruding members could be provided inside the chamber 9 in order to homogeneously distribute the gas flow.

## Claims

1. Burner (1, 30) for the generation of a flame, comprising at least one body (2, 13) made of quartz or borosilicate glass and including at least one gas outlet (4, 14a, 14b), wherein the burner is adapted to generate an elongated flame.

2. Burner (1, 30) according to claim 1, wherein the burner (1, 30) is adapted to generate a line-shaped flame.

3. Burner (1) according to claim 1 or 2, wherein the gas outlet (4) of the body (2) has an elongated shape, preferably a slit shape, such that when the elongated flame is generated, the elongated flame corresponds to the elongated shape of the gas outlet (4) as it exits the gas outlet (4).

4. Burner (1) according to any one of the previous claims, wherein no flame-focusing device or member is provided around the gas outlet (4).

5. Burner (1) according to any one of the previous claims, wherein the gas outlet (4) has a width from 0,01 to 2 mm, preferably from 0.2 to 1.5 mm,
and/or wherein the gas outlet (4) has a length of 5 to 500 mm, preferably from 10 to 250 mm.

6. Burner (1) according to any one of the previous claims, wherein the burner (1) further comprises a base frame (5) supporting or at least partially encasing the body (2).

7. Burner (1) according to claim 6, wherein the base frame (5) is made of an iron-containing alloy, preferably steel, ceramics, brass or glass, boron nitride or a combination thereof.

8. Burner (1) according to any one of claims 7 or 8, wherein the base frame (5) comprises at least one gas supply line (6) and at least one slot (7) adapted to receive the body (2), the gas supply line (6) being adapted deliver gas from the bottom side of the base frame (5) or from a side of the base frame (5).

9. Burner (1) according to claim 8, wherein a part of the slot (7) forms a chamber (9) within the base frame (5), wherein at least one baffle (10) is provided within the chamber (9) .

10. Burner (1) according to any one of claims 6 to 9, wherein the body (2) protrudes from the base frame (5) to a distance of above 0 to 150 mm, preferably 5 to 15 mm, more preferably 8 to 12 mm.

11. Burner (1) according to any one of claims 6 to 9, wherein a seal (12) is provided between the body (2) and the slot (7) of the base frame (5), preferably a rubber seal, the rubber seal more preferably comprising PTFE, silicones and/or polyimide or other high-temperature resistant polymers.

12. Burner (30) according to claim 1 or 2, wherein the at least one body (13) is made up of a multitude (20) of quartz or borosilicate nozzle bodies (13) supported and arranged in a line on a base frame (5).

13. Burner (30) according to claim 13, wherein the quartz or borosilicate nozzle bodies (13) are provided with respective nozzle holes (14a), wherein each nozzle hole (14a) has a diameter of 1 to 4 mm, or as a multitude or a bundle of capillaries (14b), wherein each capillary (14b) has preferably a diameter of 0.1 to 2.0 mm.

14. Burner (30) according to claim 12 or 13, wherein the quartz or borosilicate glass nozzle bodies (13) are supported on nozzle supports (15), wherein the nozzle supports (15) are provided with a thread (16) and are adapted to be fixed in respective holes (17) on the base frame (5), wherein said holes (17) are also provided with threads (18).

15. Process for the assembly of a burner (1) comprising at least one quartz or borosilicate glass body (2) and a base frame (5) supporting or at least partially encasing the at least one quartz or borosilicate glass body (2), comprising the following steps:
- joining quartz or borosilicate glass plates,
preferably by welding or anodic bonding, so that the glass plates encompass a slit (4), in order to generate a body (2), or forming a quartz or borosilicate glass body (2) by a sol-gel-process, comprising cold casting and sintering;
- providing a base frame (5) adapted to receive the at least one quartz or borosilicate glass body (2, 13);
- placing the at least one quartz or borosilicate glass body (2, 13) in the base frame (5);
- sealing (a) gap(s) between the at least one quartz or borosilicate glass body (2) and base frame (5).

## Patentansprüche

1. Brenner (1, 30) zur Erzeugung einer Flamme, der mindestens einen Körper (2, 13) aus Quarz- oder Borosilikatglas umfasst und mindestens einen Gasauslass (4, 14a, 14b) beinhaltet,
wobei der Brenner dazu angepasst ist, eine längliche Flamme zu erzeugen.

2. Brenner (1, 30) nach Anspruch 1, wobei der Brenner (1, 30) zum Erzeugen einer linienförmigen Flamme ausgebildet ist.

3. Brenner (1) nach Anspruch 1 oder 2, wobei der Gasauslass (4) des Körpers. (2) eine längliche Form, vorzugsweise eine Schlitzform aufweist, so dass, wenn die längliche Flamme erzeugt wird, die längliche Flamme der länglichen Form des Gasauslasses (4) entspricht, wenn sie den Gasauslass (4) verlässt.

4. Brenner (1) nach einem der vorhergehenden Ansprüche, wobei um den Gasauslass (4) herum kein(e) Flammenfokussiervorrichtung bzw. -element vorgesehen ist.

5. Brenner (1) nach einem der vorstehenden Ansprüche, wobei der Gasauslass (4) eine Breite von 0,01 bis 2 mm, vorzugsweise von 0,2 bis 1,5 mm aufweist, und/oder wobei der Gasauslass (4) eine Länge von 5 bis 500 mm, vorzugsweise von 10 bis 250 mm, aufweist.

6. Brenner (1) nach einem der vorhergehenden Ansprüche, wobei der Brenner (1) ferner einen Grundrahmen (5) umfasst, der den Körper (2) trägt oder zumindest teilweise umschließt.

7. Brenner (1) nach Anspruch 6, wobei der Grundrahmen (5) aus einer eisenhaltigen Legierung, vorzugsweise Stahl, Keramik, Messing oder Glas, Bornitrid oder einer Kombination davon hergestellt ist.

8. Brenner (1) nach einem der Ansprüche 7 oder 8, wobei der Grundrahmen (5) mindestens eine Gaszufuhrleitung (6) und mindestens einen Schlitz (7) zur Aufnahme des Körpers (2) umfasst, wobei die Gaszufuhrleitung (6) dazu angepasst ist, von der Unterseite des Grundrahmens (5) oder von einer Seite des Grundrahmens (5) aus Gas zuzuführen.

9. Brenner (1) nach Anspruch 8, wobei ein Teil des Schlitzes (7) eine Kammer (9) innerhalb des Grundrahmens (5) bildet, wobei mindestens ein Leitblech (10) innerhalb der Kammer (9) vorgesehen ist.

10. Brenner (1) nach einem der Ansprüche 6 bis 9, wobei der Körper (2) aus dem Grundrahmen (5) zu einem Abstand von mehr als 0 bis 150 mm, vorzugsweise 5 bis 15 mm, vorzugsweise 8 bis 12 mm hervorsteht.

11. Brenner (1) nach einem der Ansprüche 6 bis 9, wobei eine Dichtung (12) zwischen dem Körper (2) und dem Schlitz (7) des Grundrahmens (5), vorzugsweise eine Gummidichtung, vorgesehen ist, wobei die Gummidichtung vorzugsweise PTFE, Silikone und/oder Polyimid oder andere hochtemperaturbeständige Polymere umfasst.

12. Brenner (30) nach Anspruch 1 oder 2, wobei der mindestens eine Körper (13) aus einer Vielzahl (20) von Quarz- oder Borosilikat-Düsenkörpern (13) besteht, die in einer Reihe auf einem Grundrahmen (5) getragen und angeordnet sind.

13. Brenner (30) nach Anspruch 13, wobei die Quarz- oder Borosilikat-Düsenkörper (13) mit entsprechenden Düsenlöchern (14a) versehen sind, wobei jedes Düsenloch (14a) einen Durchmesser von 1 bis 4 mm, oder als Vielzahl oder ein Bündel von Kapillaren (14b) vorgesehen sind, wobei jede Kapillare (14b) vorzugsweise einen Durchmesser von 0,1 bis 2,0 mm aufweist.

14. Brenner (30) nach Anspruch 12 oder 13, wobei die Quarz- oder Borosilikatglas-Düsenkörper (13) auf Düsenträgern (15) getragen sind, wobei die Düsenträger (15) mit einem Gewinde (16) versehen und in entsprechenden Löchern (17) am Grundrahmen (5) fixierbar sind, wobei die Löcher (17) ebenfalls mit Gewinden (18) versehen sind.

15. Verfahren zur Montage eines Brenners (1), der mindestens einen Quarz- oder Borosilikatglaskörper (2) und einen Grundrahmen (5) umfasst, der den mindestens einen Quarz- oder Borosilikatglaskörper (2) trägt oder zumindest teilweise umschließt, umfassend die folgenden Schritte:
- Verbinden von Quarz- oder Borosilikatglasplatten, vorzugsweise durch Schweißen oder anodisches Verbinden, so dass die Glasplatten einen Schlitz (4) umfassen, um einen Körper (2) zu erzeugen, oder Bilden eines Quarz- oder Borosilikatglaskörpers (2) durch ein Sol-Gel-Verfahren, umfassend Kaltgießen und Sintern;
- Bereitstellen eines Grundrahmens (5), der zur Aufnahme des mindestens einen Quarz- oder Borosilikatglaskörpers (2, 13) angepasst ist;
- Einsetzen des mindestens einen Quarz- oder Borosilikatglaskörpers (2, 13) in den Grundrahmen (5);
- Abdichten (a) des/der Spalt(e) zwischen dem mindestens einen Quarz- oder Borosilikatglaskörper (2) und dem Grundrahmen (5).

## Revendications

1. Brûleur (1, 30) pour la génération d'une flamme, comprenant au moins un corps (2, 13) fabriqué en quartz ou verre de borosilicate et incluant au moins une sortie de gaz (4, 14a, 14b), dans lequel le brûleur est adapté pour générer une flamme allongée.

2. Brûleur (1, 30) selon la revendication 1, dans lequel le brûleur (1, 30) est adapté pour générer une flamme linéaire.

3. Brûleur (1) selon la revendication 1 ou 2, dans lequel la sortie de gaz (4) du corps (2) présente une forme allongée, de préférence une forme de fente de sorte que lorsque la flamme allongée est générée, la flamme allongée corresponde à la forme allongée de la sortie de gaz (4) lorsqu'elle sort de la sortie de gaz (4).

4. Brûleur (1) selon l'une quelconque des revendications précédentes, dans lequel un dispositif ou élément de concentration sans flamme est prévu autour de la sortie de gaz (4).

5. Brûleur (1) selon l'une quelconque des revendications précédentes, dans lequel la sortie de gaz (4) présente une largeur de 0,01 à 2 mm, de préférence de 0,2 à 1,5 mm,
et/ou dans lequel la sortie de gaz (4) présente une longueur de 5 à 500 mm, de préférence de 10 à 250 mm.

6. Brûleur (1) selon l'une quelconque des revendications précédentes, dans lequel le brûleur (1) comprend en outre un cadre de base (5) supportant ou renfermant au moins partiellement le corps (2).

7. Brûleur (1) selon la revendication 6, dans lequel le cadre de base (5) est fabriqué en un alliage contenant du fer, de préférence de l'acier, de la céramique, du laiton ou du verre, du nitrure de bore ou une combinaison de ceux-ci.

8. Brûleur (1) selon l'une quelconque des revendications 7 ou 8, dans lequel le cadre de base (5) comprend au moins une conduite d'alimentation en gaz (6) et au moins une fente (7) adaptée pour recevoir le corps (2), la conduite d'alimentation en gaz (6) étant adaptée pour fournir du gaz du côté inférieur du cadre de base (5) ou d'un côté du cadre de base (5).

9. Brûleur (1) selon la revendication 8, dans lequel une partie de la fente (7) forme une chambre (9) dans le cadre de base (5), dans lequel au moins un déflecteur (10) est prévu dans la chambre (9).

10. Brûleur (1) selon l'une quelconque des revendications 6 à 9, dans lequel le corps (2) fait saillie du cadre de base (5) à une distance de plus de 0 à 150 mm, de préférence de 5 à 15 mm, de manière davantage préférée de 8 à 12 mm.

11. Brûleur (1) selon l'une quelconque des revendications 6 à 9, dans lequel un joint (12) est prévu entre le corps (2) et la fente (7) du cadre de base (5), de préférence un joint en caoutchouc, le joint en caoutchouc comprenant de manière davantage préférée du PTFE, des silicones et/ou du polyimide ou autres polymères résistants à haute température.

12. Brûleur (30) selon la revendication 1 ou 2, dans lequel l'au moins un corps (13) est fabriqué en une multitude (20) de corps de buse en quartz ou borosilicate (13) supportés et agencés dans une ligne sur un cadre de base (5).

13. Brûleur (30) selon la revendication 13, dans lequel les corps de buse en quartz ou borosilicate (13) sont dotés de trous de buse respectifs (14a), dans lequel chaque trou de buse (14a) présente un diamètre de 1 à 4 mm, ou en tant que multitude ou faisceau de capillaires (14b), dans lequel chaque capillaire (14b) présente de préférence un diamètre de 0,1 à 2,0 mm.

14. Brûleur (30) selon la revendication 12 ou 13, dans lequel les corps de buse en quartz ou verre de borosilicate (13) sont supportés sur des supports de buse (15), dans lequel les supports de buse (15) sont dotés d'un filet (16) et sont adaptés pour être fixés dans des trous respectifs (17) sur le cadre de base (5), dans lequel lesdits trous (17) sont aussi dotés de filets (18).

15. Procédé pour l'assemblage d'un brûleur (1) comprenant au moins un corps en quartz ou verre de borosilicate (2) et un cadre de base (5) supportant ou renfermant au moins partiellement l'au moins un corps en quartz ou verre de borosilicate (2), comprenant les étapes suivantes :
- la jonction de plaques de quartz ou verre de borosilicate, de préférence par soudage ou collage anodique de sorte que les plaques de verre renferment une fente (4) afin de générer un corps (2), ou la formation d'un corps en quartz ou verre de borosilicate (2) par un procédé sol-gel, comprenant un coulage à froid et frittage ;
- la fourniture d'un cadre de base (5) adapté pour recevoir l'au moins un corps en quartz ou verre de borosilicate (2, 13) ;
- le placement de l'au moins un corps en quartz ou verre de borosilicate (2, 13) dans le cadre de base (5) ;
- l'étanchéité d'une (des) fente(s) entre les au moins un corps en quartz ou verre de borosilicate (2) et le cadre de base (5).
